# EUROPEAN PATENT APPLICATION

(11) **EP 4 475 002 A1**
(43) Date of publication of application: **11.12.2024**
(21) Application number: 23305922.9
(22) Date of filing: 09.06.2023
(51) Int. Cl.: G06F 13/40, G06F 13/42

(54) **DEVICE AND METHOD FOR COMMUNICATION**

(71) Applicant: NXP USA, Inc., Austin TX 78735 (US)
(72) Inventor: Bordes, Laurent, 31023 Toulouse Cedex 1 (FR); Mouret, Guillaume, 31023 Toulouse Cedex 1 (FR); Bertrand, Simon, 31023 Toulouse Cedex 1 (FR)
(74) Representative: Schmütz, Christian Klaus Johannes

(57) **Abstract**

The present invention relates to a device comprising two communication units, wherein one of the two communication units additionally comprises a protection unit configured to protect against excessive electrical voltages. The state of the protection unit can be changed to enable or disable the protection. Furthermore, an associated method is disclosed.

## Description

### TECHNICAL FIELD

The present disclosure relates to device for communication and a method for the device.

### BACKGROUND

In many technical fields, such as battery monitoring, devices are used which are capable of communication according to different predefined protocols. Such a device may also be referred to as a communication unit. For each protocol supported by the device, a respective dedicated communication unit may be comprised by the device. For example, if the device is capable of performing both, communication according to a first predefined protocol and communication according to a second predefined protocol, then the device will likely include a first communication unit for the first protocol and a second communication unit for the second protocol. The first communication unit is capable of performing communication according to the first protocol, but the first communication unit is likely not capable of conducting communication according to the second protocol. The second communication unit is used for this purpose. The second communication unit is capable of performing communication according to the second protocol, but the second communication unit is likely not capable of performing communication according to the first protocol.

The greater the number of protocols supported by a device for communication, the greater the number of communication units implemented by the device may be. Each communication unit requires an interface formed by the device. Often, the space available for the interfaces by the device is very limited.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a device is provided, which comprises a signal interface, referred to as device interface, for sending and/or receiving a communication signal, a first communication unit, a second communication unit, wherein the first communication unit comprises a first transceiver and another unit, referred to as a protection unit, wherein the protection unit is coupled between the first transceiver and the device interface, wherein the second communication unit comprises a second transceiver, wherein the second transceiver is coupled to the device interface, wherein the protection unit is configured to change from a first state to a second state, wherein the protection unit is configured, if in the first state, to enable a first signal connection between the device interface and the first transceiver, and wherein the protection unit is configured, if in the second state, to disable the first signal connection.

In one or more embodiments of the device, wherein the protection unit is controllable to change from the first state to the second state, or vice versa.

In one or more embodiments of the device, wherein the first communication unit comprises a first signal interface, wherein the second communication unit comprises a second signal interface, wherein the protection unit comprises a third signal interface, a fourth signal interface and a circuit arrangement, wherein the first signal interface of the first communication unit is coupled to the third signal interface of the protection unit, wherein the fourth signal interface of the protection unit is coupled to the first transceiver, wherein the second signal interface of the second communication device is coupled to the device interface, wherein the circuit arrangement extends from the third signal interface to the fourth signal interface, such that the circuit arrangement forms an electrical connection, referred to as a main connection, between the third signal interface and the fourth signal interface, wherein the circuit arrangement comprises a first switch unit integrated into the main connection, and wherein the first switch unit is configured to disconnect or reconnect the main connection at the first switch unit.

In one or more embodiments of the device, wherein the circuit arrangement comprises a second switch unit integrated into the main connection, the second switch unit is configured to disconnect or reconnect the main connection at the second switch unit.

In one or more embodiments of the device, wherein the first switch unit and the second switch unit are connected in series.

In one or more embodiments of the device, wherein the circuit arrangement comprises a further electrical connection, referred to as a pull-down connection, coupled between the fourth signal interface and a terminal, referred to as a reference electrical potential terminal, of the circuit arrangement, wherein a third switch unit of the circuit arrangement is integrated into the pull-down connection, and wherein the third switch unit is configured to disconnect or reconnect as the pull-down connection.

In one or more embodiments of the device, wherein the reference terminal is a ground terminal.

In one or more embodiments of the device, wherein the device comprises a control unit referred to as a state control unit, wherein the state control unit is configured to control the first, second and/or third switch unit.

In one or more embodiments of the device, wherein the state control unit is configured to control the at least one switch unit to enable the main connection and/or disconnect the pull-down connection so that the protection unit is in the first state.

In one or more embodiments of the device, wherein the state control unit is configured to control the at least one switch unit to disable the main connection and/or to connect the pull-down connection such that the protection unit is in the second state.

In one or more embodiments of the device, wherein the first communication unit is configured to perform communication according to the SPI protocol.

In one or more embodiments of the device, wherein the second communication unit is configured to perform communication according to the TPL protocol.

In one or more embodiments of the device, wherein the protection unit and the first transceiver are formed by a common IC.

In one or more embodiments of the device, wherein the IC forms the first and second communication units.

According to a second aspect of the present disclosure, a method for a device is provided, wherein the device comprising a signal interface referred to as a device interface, a first communication unit, and a second communication unit, wherein the device interface comprises at least one terminal, wherein the first communication unit comprises a first transceiver and a protection unit, wherein the protection unit is coupled between the first transceiver and the device interface, wherein the second communication unit comprises a second transceiver, wherein the second transceiver is coupled to the device interface, and the method comprising the step of: controlling the protection unit such that the protection unit changes from a first state to a second state, wherein the protection unit is configured, if in the first state, to enable a first signal connection between the device interface and the first transceiver, and wherein the protection unit is configured, if in the second state, to disable the first signal connection.

In accordance with a fifth aspect of the present disclosure, a computer program is provided, comprising executable instructions which, when executed by a processing unit, cause the processing unit being configured to carry out the method of the second aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
Figure 1 shows a simplified block diagram of an embodiment of the device.
Figure 2 shows a simplified block diagram of an embodiment of the protection unit.
Figure 3 shows a simplified block diagram of another embodiment of the device.
Figure 4 shows a simplified block diagram of a flow chart of the method.

### DESCRIPTION OF EMBODIMENTS

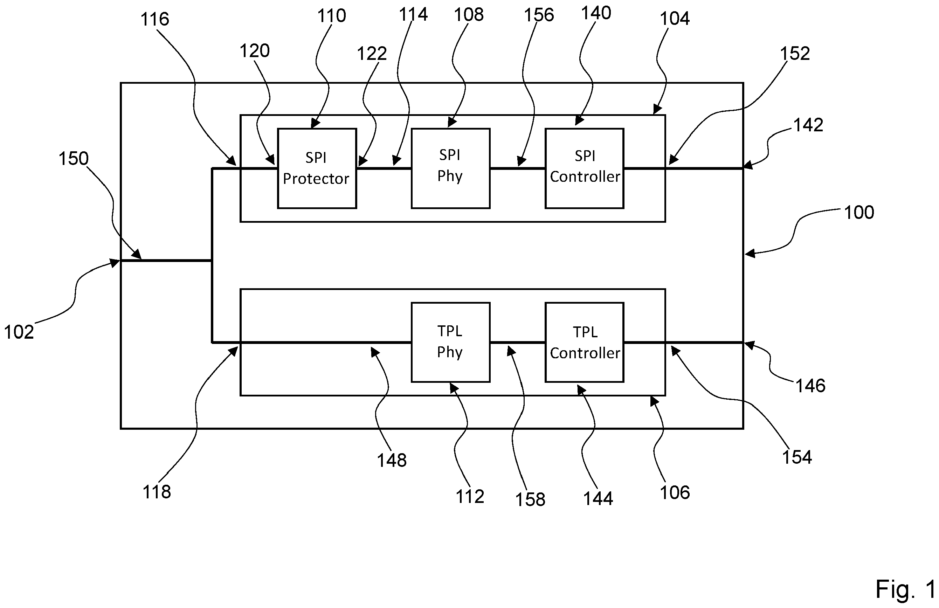

Figure 1 schematically illustrates an example of an embodiment of a device 100 that includes a first communication unit 104 and a second communication unit 106. The device may also be referred to as a communication device 100. The first communication unit 104 and the second communication unit 106 are preferably different communication units 104, 106. In an example, the first communication unit 104 is configured to communicate according to a first predefined protocol. A protocol may be understood as a communication protocol. The second communication unit 106 may be configured to communicate according to a second, predefined protocol. The two protocols may be different protocols.

Often, the space of the device 100 available to form interfaces for the two communication units 104, 106 is very limited. Therefore, the device 100 includes a signal interface 102, referred to as the device interface 102. The device interface is used to send and receive communication signals. Both, the first and second communication units 104, 106 may be coupled to the same device interface 102, thereby saving the consumption of space on the exterior of the device 100.

The device 100 may include a signal connection 150 extending from the device interface 102 to both a first signal interface 116 of the first communication unit 104 and a second signal interface 118 of the second communication unit 106. A communication signal sent to the device interface 102 may be transmitted to both the first signal interface 116 of the first communication unit and the second signal interface 118 of the second communication unit 106 via the signal connection 150.

The protocols implemented by the two communication units 104, 106 are different protocols. The protocols may differ in the voltage range of a communication signal used to represent data. In an example, the first communication unit 104 may be configured so that a first electrical voltage of a first communication signal can be applied to the first signal interface 116 that is within a first predefined voltage range. The first communication unit 104 may be configured such that the first electrical voltage, if within the first voltage range, does not cause destruction within the first communication unit 104. In another example, the second communication unit 106 may be configured such that a second electrical voltage of a second communication signal can be applied to the second signal interface 118 that is within a second predefined voltage range. The second communication unit 106 may be configured such that the second electrical voltage, if within the second voltage range, does not cause destruction within the second communication unit 106.

The second voltage range may be larger than the first voltage range. Further, the first voltage range may be covered and/or within the second voltage range. The first electrical voltage range may be defined by the first protocol, and the second electrical voltage range may be defined by the second protocol. The two electrical voltage ranges may be different. In an example, the first voltage range may be defined by a lower limit of -10 V and an upper limit of +10 V. In an example, the second voltage range may be defined by a lower limit of -40 V and an upper limit of +40 V.

In the example of the embodiment of the device 100 of Figure 1, both the first signal interface 116 of the first communication unit 104 and the second signal interface 118 of the second communication unit 106 are coupled to the device interface 102, preferably via the signal connection 150. The signal connection 150 may be configured as a branched signal connection. A second communication signal may be received via the device interface 102 according to the second protocol. A second electrical voltage of the second communication signal may be less than a lower limit of the first voltage range according to the first protocol or greater than an upper limit of the first voltage range according to the first protocol. In an example, the second electrical voltage is +40 V. The second electrical voltage may be communicated to both the first communication unit 104 and the second communication unit 106 via the signal connection 150. The second electrical voltage does not cause destruction of the second communication unit 106. It is desirable that even if the second electrical voltage reaches a value according to the lower limit of the second electrical voltage or the value of the upper limit of the second electrical voltage, the second electrical voltage shall not cause destruction of the first communication unit 104.

The first communication unit 104 includes a first transceiver 108 and another unit 110, referred to as the protection unit 110. The protection unit 110 is coupled between the first transceiver 108 and the device interface 102. In an example, the protection unit 110 may be coupled between the first transceiver 108 and the first signal interface 116 of the first communication unit 104. The second communication unit 106 includes a second transceiver 112 coupled to the device interface 102. In an example, the second transceiver 112 is coupled to the second signal interface 118 of the second communication unit 106. Preferably, the second communication unit 106 does not include a protection unit, in particular not a protection unit such as the protection unit 110. Instead, the second transceiver 112 may be coupled directly via at least on signal connection 150, 148 and via the second signal interface 118 to the device interface 102.

The first protection unit 110 of the first communication unit 104 is configured to change from a first state to a second state. The first state and the second state each refer to the first protection unit 110. Against this background, the first state can be understood as a first state of the first protection unit 110 and the second state can be understood as a second state of the first protection unit 110. The protection unit 110, if in the first state, is configured to establish and/or reconnect a first signal connection 140 between the device interface 102 (or the first signal interface 116) and the first transceiver 108.

In an example, the protection unit 110 may be configured, if in the first state, to enable, preferably to establish and/or (re-)connect, the first signal connection 114 between the first signal interface 116 of the first communication unit 104 and the first transceiver 108. The enabled, in particular established and/or (re-)connected first signal connection 140 is able for transmitting and/or forwarding a communication signal from the first signal interface 116 to the first transceiver 108. Enabling a signal connection may be understood to establish, connect or reconnect the signal connection.

In an example, the protection unit 110 may be configured, if in the second state, to disable, preferably to disconnect, the first signal connection 114 between the first signal interface 116 of the first communication unit 104 and the first transceiver 108. The disabled, in particular disconnected, first signal connection 114 is able prevent the transmission and/or the forwarding of the communication signal from the first signal interface 116 to the first transceiver 108. Disabling the signal connection may be understood to disconnect or interrupt the signal connection.

In an example, it may be assumed that a communication signal is transmitted to the device interface 102 formed according to the second protocol, so that a second voltage of the communication signal does not cause destruction of the second communication unit 106, but there is a risk that the second voltage could cause destruction of the first communication unit 104 if reaching the lower or upper limit of the second voltage range. The protection unit 110, if in the second state, prevents the second electrical voltage from causing destruction of the first communication unit 104 even if the second electrical voltage reaches a value according to the lower or upper limit of the second voltage range.

The protection unit 110 may be configured such that the second electrical voltage does not cause destruction of the protection unit 110, even if the second electrical voltage reaches a value according to the lower or upper limit of the second voltage range. Therefore, a communication signal according to the second protocol may be transmitted to the protection unit 110 via the device interface 102 without causing destruction of the protection unit 110. Rather, the protection unit 110 can resist a second electrical voltage of the communication signal without being destroyed even if the second electrical voltage reaches a value according to the lower or upper limit of the second voltage range. The first transceiver 108 and/or other components of the first communication unit 104 may be configured such that the second electrical voltage causes destruction of the first transceiver 108 and or the other components of the first communication unit 104 if the second electrical voltage having a value according to the lower or upper limit of the second voltage range would reach the first transceiver 108 or the other components. However, if the protection unit 110 is set to the second state, there is no risk of destruction of the first transceiver 108 and/or the other components of the first communication unit 104 by the second electrical voltage.

A protocol used to communicate and transmit a communication signal to the device interface 102 of the device 100 is often known in advance of the implementation and/or use of the device 100. In an example of use of the device 100, it may be known that the second protocol is used for communication, such that the device 100 may be configured to receive a communication signal via the device interface 102 according to the second protocol. In this case, the protection unit 110 may be controlled and/or configured such that the protection unit 110 is in the second state. As a result, the device 100 may receive the communication signal at the associated device interface 102 without a risk of destroying the first communication unit 104, in particular the first transceiver 108 or other components of the first communication unit 104, such as the first controller 140.

In another example of use of the device 100, it may be known that the first protocol is used for communication, such that the device 100 may be configured to receive a communication signal via the device interface 102 according to the first protocol. In this case, the protection unit 110 may be controlled and/or configured such that the protection unit 110 is in the first state. As a result, the device 100 may receive the communication signal at the associated device interface 102 without a risk of destroying the first communication unit 104.

The device 100 may be used for a battery management system (BMS) or a battery cell controller (BCC). For example, the device 100 may be an integral part of the BMS or the BCC.

To monitor battery cells and control their charging and discharging operations, each battery cell controller (BCC) may communicate with a central control unit of the BMS. The central control unit may include a central processing unit (CPU).

In an example, communication between the central control unit and each BCC may be via one of the following two protocols for communication:

Serial Peripheral Interface (SPI) protocol: the SPI protocol is based on synchronous serial communication. Communication can be in full duplex mode. A master-slave architecture can be used for SPI communication.

Transformer Physical Layer (TPL) protocol: the TPL protocol is based on differential point-to-point communication over a galvanically isolated bus, usually via magnetically coupled and electrically isolated transformers. Differential isolated point-to-point communication using transformers can use bidirectional transceivers, which achieve that an undamped message can be transmitted via a daisy chain to both the downstream and upstream battery cell controllers.

In an example, the first communication unit 104 may be configured to perform communication according to the SPI protocol. A voltage range of 0 V to +3.3 V may be used to represent data according to the SPI protocol. Due to interference, such as electromagnetic interactions, voltages may occur outside of the voltage range used to represent data. The first voltage range can therefore be larger than the voltage range used to represent data. The first voltage range may be predefined by the lower limit (-5 V) and the upper limit (+5 V).

In an example, the second communication unit 106 may be configured to perform communication according to the TPL protocol. A voltage range of -10 V to +10 V may be used to represent data according to the TPL protocol. Due to interference, such as electromagnetic interactions, voltages may occur outside of the voltage range used to represent data. The second voltage range can therefore be larger than the voltage range used to represent data. The second voltage range may be predefined by the lower limit (-40 V) and the upper limit (+40 V).

Figure 1 schematically illustrates an example of the device 100. The device 100 comprises the first communication unit 104. The first communication unit 104 comprises the protection unit 110, the first transceiver 108, and preferably also a first controller 140. The protection unit 110, the first transceiver 108, and the first controller 140 may be coupled in series. A communication signal transmitted to the first communication interface 116 of the first communication unit 104 may be passed to the first transceiver 108 via the first protection unit 110 if in the first state. The first transceiver 108 may be configured to generate a signal, referred to as a first transceiver signal, based on the received communication signal. The first transceiver 108 is coupled to the first controller 140 via a signal connection 156. The first transceiver 108 may transmit the first transceiver signal to the first controller 140 via the signal connection 156. The first controller 140 may be configured to decode data represented by the first transceiver signal, referred to as first receive data. The first controller 140 is coupled to a fifth signal interface 152 of the first communication unit 104. The fifth signal interface 152 may be coupled to a second device interface 142 of the device 100. The first controller 140 may send the first receive data via the fifth signal interface 152 and/or the second device interface 142. In an example, the first communication unit 104 may be configured for bidirectional communication. The first communication unit 104 may be configured, such that the communication path previously explained may also be possible in the reverse direction.

Figure 1 schematically illustrates an example of the second communication unit 106, which is comprised by the device 100. The second communication unit 106 comprises the second transceiver 112 and preferably also the second controller 144. The second transceiver 112 and the second controller 144 may be coupled in series. A communication signal transmitted to the second communication interface 118 of the second communication unit 106 may be passed to the second transceiver 112 via the signal connection 148. The second transceiver 112 may be configured to generate a signal, referred to as a second transceiver signal, based on the received communication signal. The second transceiver 112 is coupled to the second controller 144 via a signal connection 158. The second transceiver 112 may transmit the second transceiver signal to the second controller 144 via the signal connection 158. The second controller may be configured to decode data represented by the second transceiver signal, referred to as second receive data. The second controller 144 is coupled to the sixth signal interface 154 of the second communication unit 106. The sixth signal interface 154 may be coupled to the third device interface 146 of the device 100. The second controller 144 may be configured to send the second received data via the sixth signal interface 154 and/or the third device interface 146. In an example, the second communication unit 106 may be configured for bidirectional communication. The second communication unit 106 may be configured, such that the communication path previously explained may also be possible in the reverse direction.

In an example, the protection circuits 110 and the first transceiver 108 are integrated into a single integrated circuit (IC). The IC may further integrate the first controller 140. Thus, the first communication unit 104 may be formed by a single IC. The second communication unit 106 may further be formed by this IC or another IC. In an example, the entire device 100 may be formed by a single IC. The integration of the protection circuit 110 into a common, single IC, in particular with the first transceiver 108 and the first controller 140, and further in particular also comprising the second transceiver 112 and the second controller 144, offers the advantage that the device 100 can be manufactured in a compact and cost-effective manner. Studies made have shown that integration of the protection circuit 110 into the single IC results in a space consumption in the IC that is about 290 times smaller than a space consumption if a (another) protection circuit would formed separately outside the IC. The cost is also reduced by a multiple if the protection circuit 110 is integrated into the IC.

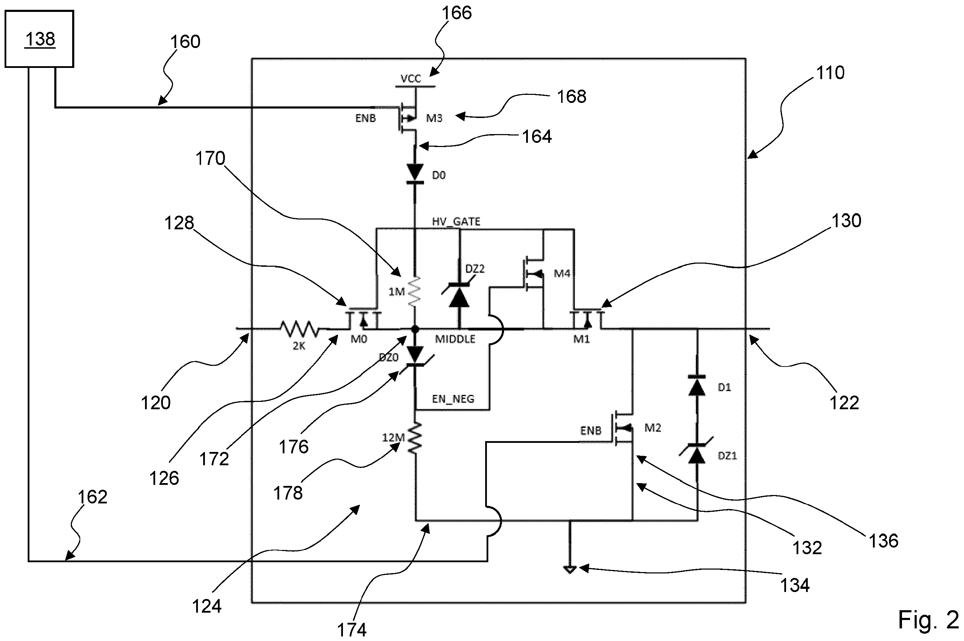

Figure 2 schematically illustrates an example of an embodiment of the protection unit 110. The device 100 and/or the first communication unit 104 may further comprise a control unit 138, which may be referred to as a state control unit 138. The state control unit 138 is schematically shown in Figure 2, too.

In an example, the protection unit 110 is controllable to change from the first state to the second state, or vice versa. The protection unit 110 may be configured to receive a control signal and to perform the change from the first state to the second state, or vice versa, based on the control signal. The state control unit 138 may be coupled to the protection unit 110 via at least one signal connection 160. The state control unit 138 may be configured to generate the control signal for the protection unit 110 to change the state of the control unit 110. The state control unit 138 may transmit the control signal, preferably via the at least one signal connection 160, to the protection unit 110. As a result, the state control unit 138 may control the protection unit 110 via the control signal such that the protection unit 110 is either in the first state or in the second state. In an example, the state control unit 138 is integrated into the first communication unit 104.

If the device 100 is to be used for communication via the second communication unit 106 and/or according to the second protocol, the device 100 may control the state control unit 138 such that the state control unit 138 controls the protection unit 110 to change and/or remain in the second state. In the second state, the protection unit 110 disconnects the first signal connection 114 between the first signal interface 116 of the first communication unit 104 and the first transceiver 108. By disconnecting the first signal connection 114, the first transceiver 108 and/or the first controller 140 are protected from being destroyed by the communication signal that the device 100 may receive via the associated device interface 102 during the aforementioned use.

If the device 100 is to be used for communication via the first communication unit 104 and/or according to the first protocol, the device may control the state control unit 138 such that the state control unit controls the protection unit 110 to change and/or remain in the first state. In the first state, the first signal connection 114 between the first signal interface 116 of the first communication unit 104 and the first transceiver 108 is reconnected. The reconnected first signal connection 114 allows a communication signal transmitted to the first signal interface 116 to be forwarded to the first transceiver 108. The communication signal may further be forwarded to the second transceiver 112 via the signal connection 150 and the signal connection 148. The first protocol may be implemented by the first transceiver 140, and preferably not by the second transceiver 144. The second protocol may be implemented by the second transceiver 144, and preferably not by the first transceiver 140. If the communication signal is forwarded to both, the first and second transceivers 108, 112, and if the communication signal represents data according to the first protocol, only the first controller 140 will be capable of decoding the data as first receive data. The second controller 144 will not decode data or will not decode valid data. The reverse may apply accordingly, if the second protocol is used for communication.

Figure 2 schematically illustrates an example of an embodiment of the protection unit 110. The protection unit 110 may include a signal interface 120, which may be referred to as the third signal interface 120, and another signal interface 122, which may be referred to as the fourth signal interface 122. The third signal interface 120 of the protection unit 110 may be coupled to the first signal interface 116 of the first communication unit 104. If a communication signal is transmitted to the first signal interface 116, the communication signal may be passed directly to the third signal interface 120 of the protection unit 110. The fourth signal interface 122 may be coupled to the first transceiver 108.

In an example, the protection unit 110 is integrated into the signal connection 114 extending from the first signal interface 116 to the first transceiver 108. A first section of the signal connection 114 may extend from the first signal interface 116 to the third signal interface 120. A second section of the signal connection 114 may extend from the fourth signal interface 122 to the first transceiver 108.

The protection unit 110 may include a circuit arrangement 124 extending from the third signal interface 120 to the fourth signal interface 122. The circuit arrangement 124 may include a first switch unit 128. The circuit arrangement 124 may extend from the third signal interface 120 to the fourth signal interface 122 such that the circuit arrangement 124 forms an electrical connection 126, referred to as the main connection 126, between the third signal interface 120 and the fourth signal interface 122. In an example, the main connection 126 may form another section of the first signal connection 114.

The circuit arrangement 124 may include the first switch unit 128 integrated with the main connection 126. In an example, the first switch unit 128 is integrated and/or formed into the main connection 126 such that the first switch unit 128 can disconnect the main connection 126. The first switch unit 128 can disconnect the main connection 126 at the location where the first switch unit 128 is integrated into the main connection 126. At the same location, the first switch unit 128 may reconnect the main connection 126.

The state control unit 138 may be coupled to the circuit arrangement 124 via the signal connection 160 such that the state control unit 138 may control the circuit arrangement 124. In an example, the state control unit 138 may be configured to directly or indirectly control the first switch unit 128. For example, the state control unit 138 may control the first switch unit 128 such that the first switch unit 128 disconnects or reconnects the main connection 126. If the first switch unit 128 is controlled by the state control unit 38 such that the first switch unit 128 disconnects to the main connection 126, this disconnection of the main connection 126 causes the protection unit 110 to change to the second state. Conversely, if the main connection 126 is disconnected by the first switch unit 128, and if the first switch unit 128 is controlled by the state control unit 138 so that the first switch unit 128 reconnects the main connection 126, the reconnected main connection 126 causes the protection unit 110 to change to the first state. The first switch unit 128 provides a simple and efficient means for causing the protection unit 110 to change state.

In an example, the first switch unit 128 is formed by a semiconductor transistor, in particular an NMOS transistor or PMOS transistor. The first switch unit 128 may also be referred to as a first semiconductor switch.

In another example, the circuit arrangement 124 may comprise a second switch unit 130. The second switch unit 130 may be integrated and/or formed in the main connection 126 such that the second switch unit 130 may disconnect the main connection 126. The second switch unit 130 may disconnect the main connection 126 at the location where the second switch unit 130 is integrated into the main connection 126. At the same location, the second switch unit 130 may reconnect the main connection 126. The second switch unit 130 has the advantage that the second switch unit 13 can be used to cause further disconnection of the main connection 126, so that a second state of the protection unit 110 can be kept very robust against disturbances.

In an example, the second switch unit 130 is formed by a semiconductor transistor, in particular by an NMOS transistor or PMOS transistor. The second switch unit 130 may also be referred to as a second semiconductor switch.

In an example, the first switch unit 128 and the second switch unit 130 are connected in series. Either of the switch units 128, 130 may cause an disconnection of the main connection 126. If both switch units 128, 130 effect an disconnection of the main connection 126, such an disconnection is particularly robust against interference and/or high voltages, such that interference and/or high voltages can be kept away from the first transceiver 108.

In an example, the circuit arrangement 124 includes another connection 132, which may be referred to as a pull-down connection 132, and a terminal 134, which may be referred to as a reference terminal 134. The pull-down connection 132 may extend from the fourth signal interface 122 to the reference port 134. Further, the circuit arrangement 124 may include a third switch unit 136 that is integrated into the pull-down connection 132. The integration has the effect of coupling the third switch unit 132 between the reference terminal 134 and the fourth signal interface 144. The third switch unit 132 is integrated and/or formed into the pull-down connection 132 such that the third switch unit 136 can disconnect the pull-down connection 132. The third switch unit 136 may disconnect the pull-down connection 132 at a location where the third switch unit 136 is integrated into the pull-down connection. At the same location, third switch unit 36 can reconnect pull-down connection 132.

In an example, reference connection 134 is used to connect to a ground potential (0 Volts) and/or other predefined electrical potential. If the protection unit 110 is in the second state, the protection unit 110 disconnects the first signal connection 114. The purpose of this disconnection is to ensure that a communication signal transmitted to the first signal interface 116 is not passed to the first transceiver 108 and/or the first controller 140. In the second state of the protection unit 110, the third switch unit 136 may be controlled so that the third switch unit 136 (re-)connects the pull-down connection 132. In the event that a disturbance signal and/or a portion of the communication signal passes through the first switch unit 128 and/or the second switch unit 130, the disturbance signal and/or said portion of the communication signal is drawn through the connected pull-down connection 132 to the reference terminal 134 where the disturbance and/or the portion of the communication signal terminates. As an effect, with the pull-down connection 132 connected, the electrical potential at the fourth signal interface 122 is maintained and/or set constant and robust against disturbances at an electrical potential defined by an electrical voltage source connected to the reference terminal 134. With the aid of the third switch unit 136, the pull-down connection 132, and the reference terminal 134, a means is provided such that the circuit arrangement 110 in the second state is particularly robust to disturbances and/or high voltages of the communication signal (in particular when using the second protocol for communication).

In an example, the state control unit 138 is coupled to the third switch unit 136 via another signal connection 162 so that the third switch unit 136 can be controlled by the state control unit 138. The state control unit 138 may control the third switch unit 36 such that the third switch unit 136 disconnects or re-connects the pull-down connection 132.

In an example, the third switch unit 136 is formed by a semiconductor transistor, particularly an NMOS transistor or PMOS transistor. The third switch unit 136 may also be referred to as a third semiconductor switch.

In an example, the state control unit 138 is coupled with the circuit arrangement 124 and/or configured to control the at least one switch unit 128, 130, 136 such that the main connection 126 is disconnected and/or the pull-down connection 132 is connected so that the first protection unit 110 is in the second state. As an effect, the state control unit 138 may control the circuit arrangement 124 and/or the protection unit 110 such that the protection unit 110 changes to the second state. In the second state, the main connection 126 may be disconnected by the first switch unit 128 and/or by the second switch unit 130. In the second state, the pull-down connection 132 may be (re-)connected by the third switch unit 136. In the second state, if the main connection 126 is disconnected by both switch units 126, 130 and the pull-down connection 132 is (re-connected by the third switch unit, the protection unit 110 in the second state is particularly robust to disturbance signals and/or high voltages of a communication signal at the first device interface 102, the first signal interface 116 and/or the third signal interface 120.

In an example, the state control unit 138 is coupled to and/or configured to control the at least one switch unit 128, 130 times 136 such that the main connection 126 is (re-)connected and/or the pull-down connection 132 is disconnected such that the first protection unit 110 is in the first state. As an effect, the protection unit 110 may pass a communication signal from the third signal interface 120 to the fourth signal interface 122 via the (re-)connected main connection 126. Because of the disconnected pull-down connection 132, the communication signal is not drawn to the reference terminal 134. Therefore, the communication signal may be forwarded to the first transceiver 108.

In an example, the circuit arrangement 124 includes a further signal connection 164 extending from a further terminal 166, also referred to as a supply terminal 166, to the first switch unit 128 and/or the second switch unit 130. In an example, the signal connection 164 may extend in a Y-shape from the supply terminal 166 to both, the first and second switch units 128, 130. A fourth switch unit 168 may be integrated into the signal connection 164 and/or configured so as to disconnect the signal connection 164 to the supply terminal 166. The fourth switch unit 168 may be integrated into the signal connection 164 at a location such that the fourth switch unit 168 may disconnect the first and second switch units 128, 130 from the electrical connection 164. The signal connection 164 may extend to a control terminal of each of the first switch unit 128 and/or the second switch unit 130. As an effect, the fourth switch unit 168 may control both the switch units 128, 130 in parallel, in particular to open or close the switch units. A control terminal of the fourth switch unit 168 may be coupled to the state control unit 138 via the signal connection 160. The state control unit 138 may be configured to control the fourth switch unit 168. The state control unit 138 may control the fourth switch unit 168 such that, by controlling the fourth switch unit 168, the first switch unit 128 and/or the second switch unit 138 are also (indirectly) controlled by the state control unit 138.

An example will be explained below, where the protection circuit 110 is set to the second state. In this example, the supply terminal 166 is supplied with a supply voltage of 5 V. The reference terminal 134 is connected to an electrical voltage potential of 0 V, such as ground potential. The state control unit 138 generates a control signal having a voltage value of 5 V. The state control unit 138 sends the control signal to the control terminal of the fourth switch unit 168 via the signal connection 160. The fourth switch unit 168 is preferably formed as a PMOS transistor. The control terminal of the fourth switch unit 168 may be the gate terminal of the PMOS transistor. By the control signal passed to the gate terminal via the signal connection 160, the fourth switch unit 168 is set to an open state so that the signal connection 164 is disconnected at the location where the fourth switch unit 168 is integrated into the signal connection 164. Due to the disconnected signal connection 164, the first switch unit 126 and the second switch unit 130 are not coupled to the supply terminal 166. The first switch unit 126 and the second switch unit 130 are preferably each formed as an NMOS transistor. The gate terminal of the first switch unit and the gate terminal of the second switch unit 130 are coupled to each other via a branch of the signal connection 164. Further, the two gate terminals of the switch units 128, 130 are coupled to a node 172 of the circuit arrangement 124 via an electrical resistor 170. The node 172 is preferably integrated into the main connection 126. A further signal connection 174 of the circuit arrangement 124 extends from the node 172 to the reference terminal 134. A diode 176, in particular a Z-diode 176, and a further electrical resistor 178 are integrated in the signal connection 174. Due to the opened fourth switch unit 168 as well as the signal connection 174, the voltage potential of 0 V of the reference terminal 134 is present at the gate terminals of the first and second switch units 128, 130. As an effect, both, the first switch unit 128 and the second switch unit 130 are in the open state so that the main connection 126 is disconnected by both switch units 128, 130. The third switch unit 136 is preferably formed as an NMOS transistor. The gate terminal of the third switch unit 136 is preferably coupled to the state control unit 138 via the signal connection 162. The state control unit 138 may generate the control signal having a voltage of 5 V, which is passed to the gate terminal of the third switch unit 136 via the signal connection 162. As an effect, the third switch unit 136 changes to the open state so that a direct (or re-connected) connection 132 between the fourth signal interface 122 and the reference terminal 134 is established. If a communication signal is transmitted to the third signal interface 120, the communication signal having, for example, an electrical voltage of +40 Volts, the protection unit 110 in the second state (as previously explained) will prevent the electrical voltage of +40 Volts from being forwarded to the fourth signal interface 122. Preferably, the circuit arrangement 124 of Figure 2 is also configured such that a communication signal having an electrical voltage of, for example, -40 Volts will not be passed through to the fourth signal interface 122 if the protection circuit 110 is in the second state.

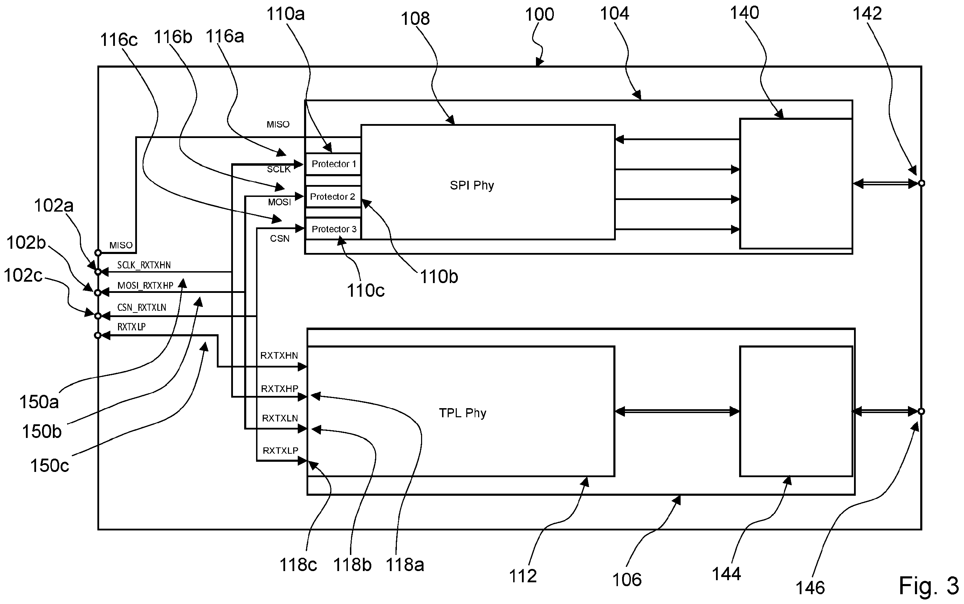

Figure 3 schematically illustrates an example of a further embodiment of the device 100. For the device 100 of Figure 3, reference is made to the preceding explanations, preferred features, technical effects and advantages in an analogous manner as already explained with respect to Figures 1 and 2.

The device 100 of Figure 3 includes the device interface 102. The device interface 102 may include a plurality of terminals, such as terminals 102a, 102b, 102c. The first signal interface 116 of the first communication unit 104 may have multiple terminals, such as terminals 116a, 116b, 116c. The second signal interface 118 of the second communication unit 106 may have multiple terminals, such as terminals 118a, 118b, 118c. A signal connection 150a may extend from the terminal 102a of the device interface 102 to both, the terminal 116a and the terminal 118a. A signal connection 150b may extend from the terminal 102b of the device interface 102 to both the terminal 116b and the terminal 118b. A signal connection 150c may extend from the device interface terminal 102c to both the terminal 116c and the terminal 118c. The signal connection 105a to 150c may also be collectively understood as the signal connection 150.

A first protection unit 110a may be coupled between the terminal 116a and the first transceiver 108. A second protection unit 110b may be coupled between the connection 116b and the first transceiver 108. A third protection unit 110c may be coupled between the terminal 116c and the first transceiver 108. The first, second, and third protection units 110a, 110b, 110c may each be configured as the previously explained protection unit 110. For the first, second, and third protection units 110a, 110b, 110c, reference is made to the preceding explanations, preferred features, technical effects, and advantages in an analogous manner as previously explained for the protection unit 110.

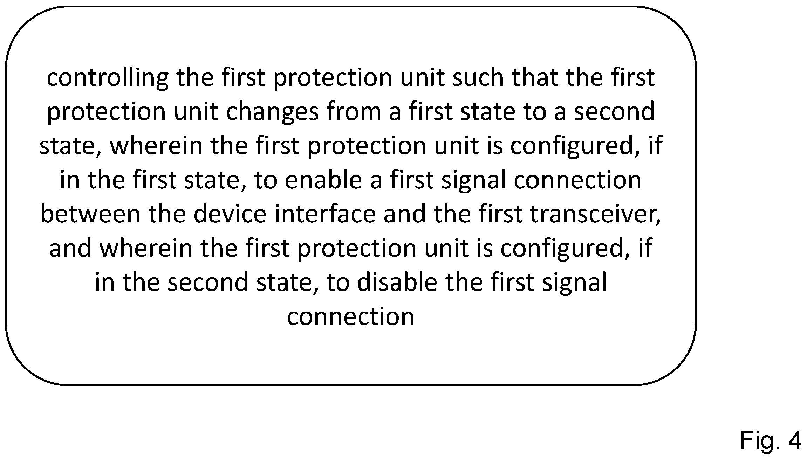

Figure 4 schematically illustrates an example of a method. For the method, reference is made in an analogous manner to the preceding explanations, preferred features, technical effects, and advantages as previously explained for the device 100.

The method relates to the device 100 comprising the signal interface 102 referred to as the device interface 102, the first communication unit 104, and the second communication unit 106, wherein the first communication unit 104 comprises the first transceiver 108 and the protection unit 110, wherein the protection unit 110 is coupled between the first transceiver 108 and the device interface 102, wherein the second communication unit 106 comprises the second transceiver 112, wherein the second transceiver 112 is coupled to the device interface 102, the method comprising the step of: controlling the protection unit 110 such that the protection unit 110 changes from the first state to the second state, wherein the protection unit 110 is configured, if in the first state, to enable a first signal connection between the device interface 102 and the first transceiver 108, and wherein the protection unit 110 is configured, if in the second state, to disable the first signal connection.

Although the described exemplary embodiments disclosed herein focus on devices, and methods for using same, the present disclosure is not necessarily limited to the example embodiments illustrate herein

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first", "second", etc. are used to arbitrarily distinguish between the elements such terms describe. Thus, these terms are not necessarily intended to indicate temporal or other prioritization of such elements.

## Claims

1. A device comprising:
a signal interface, referred to as device interface, for sending and/or receiving a communication signal,
a first communication unit,
a second communication unit,
wherein the first communication unit comprises a first transceiver and another unit, referred to as a protection unit,
wherein the protection unit is coupled between the first transceiver and the device interface
wherein the second communication unit comprises a second transceiver,
wherein the second transceiver is coupled to the device interface,
wherein the protection unit is configured to change from a first state to a second state,
wherein the protection unit is configured, if in the first state, to enable a first signal connection between the device interface and the first transceiver, and
wherein the protection unit is configured, if in the second state, to disable the first signal connection.

2. The device according to the preceding claim, wherein the protection unit is controllable to change from the first state to the second state, or vice versa.

3. The device according to any of the preceding claims, wherein the first communication unit comprises a first signal interface, wherein the second communication unit comprises a second signal interface, wherein the protection unit comprises a third signal interface, a fourth signal interface and a circuit arrangement, wherein the first signal interface of the first communication unit is coupled to the third signal interface of the protection unit, wherein the fourth signal interface of the protection unit is coupled to the first transceiver, wherein the second signal interface of the second communication device is coupled to the device interface, wherein the circuit arrangement extends from the third signal interface to the fourth signal interface, such that the circuit arrangement forms an electrical connection, referred to as a main connection, between the third signal interface and the fourth signal interface, wherein the circuit arrangement comprises a first switch unit integrated into the main connection, and wherein the first switch unit is configured to disconnect or reconnect the main connection at the first switch unit.

4. The device according to the preceding claim, wherein the circuit arrangement comprises a second switch unit integrated into the main connection, the second switch unit is configured to disconnect or reconnect the main connection at the second switch unit.

5. The device according to the preceding claim, wherein the first switch unit and the second switch unit are connected in series.

6. The device according to any of the preceding claims 3 to 5, wherein the circuit arrangement comprises a further electrical connection, referred to as a pull-down connection, coupled between the fourth signal interface and a terminal, referred to as a reference electrical potential terminal, of the circuit arrangement, wherein a third switch unit of the circuit arrangement is integrated into the pull-down connection, and wherein the third switch unit is configured to disconnect or reconnect as the pull-down connection.

7. The device according to the preceding claim, wherein the reference terminal is a ground terminal.

8. The device according to any of the preceding claims 3 to 7, wherein the device comprises a control unit referred to as a state control unit, wherein the state control unit is configured to control the first, second and/or third switch unit.

9. The device according to any of the preceding claims, wherein the state control unit is configured to control the at least one switch unit to enable the main connection and/or disconnect the pull-down connection so that the protection unit is in the first state.

10. The device according to any of the preceding claims 8 to 9, wherein the state control unit is configured to control the at least one switch unit to disable the main connection and/or to connect the pull-down connection such that the protection unit is in the second state.

11. The device according to any of the preceding claims, wherein the first communication unit is configured to perform communication according to the SPI protocol.

12. The device according to any of the preceding claims, wherein the second communication unit is configured to perform communication according to the TPL protocol.

13. The device according to any of the preceding claims, wherein the protection unit and the first transceiver are formed by a common IC.

14. The device according to any of the preceding claims, wherein the IC forms the first and second communication units.

15. A method for a device comprising a signal interface referred to as a device interface, a first communication unit, and a second communication unit, wherein the device interface preferably comprises at least one terminal, wherein the first communication unit comprises a first transceiver and a protection unit, wherein the protection unit is coupled between the first transceiver and the device interface, wherein the second communication unit comprises a second transceiver, wherein the second transceiver is coupled to the device interface, the method comprising the step of:
controlling the protection unit such that the protection unit changes from a first state to a second state, wherein the protection unit is configured, if in the first state, to enable a first signal connection between the device interface and the first transceiver, and wherein the protection unit is configured, if in the second state, to disable the first signal connection.
